**Europäisches Patentamt**

(19) **European Patent Office**

**Office européen des brevets**

(11) Veröffentlichungsnummer: **0 092 604**
**B1**

(12) # EUROPÄISCHE PATENTSCHRIFT

(45) Veröffentlichungstag der Patentschrift:
**29.10.86**

(51) Int. Cl.⁴: **H 01 M 10/06, H 01 M 10/42**

(21) Anmeldenummer: **82111064.0**

(22) Anmeldetag: **30.11.82**

(54) **Bleiakkumulator mit Expanderdepot.**

(30) Priorität: **26.04.82 DE 3215489**

(43) Veröffentlichungstag der Anmeldung:
**02.11.83 Patentblatt 83/44**

(45) Bekanntmachung des Hinweises auf die Patenterteilung:
**29.10.86 Patentblatt 86/44**

(84) Benannte Vertragsstaaten:
**DE FR GB SE**

(56) Entgegenhaltungen:
**DE - B - 2 736 750**
**FR - A - 356 950**
**FR - A - 2 445 035**
**GB - A - 1 145 908**
**US - A - 3 773 563**

**PATENTS ABSTRACTS OF JAPAN, Band 5, Nr. 30**
**(E-47)(702), 24. Februar 1981**

(73) Patentinhaber: **VARTA Batterie Aktiengesellschaft, Am Leineufer 51, D-3000 Hannover 21 (DE)**

(72) Erfinder: **Ledjeff, Konstantin, Dr., Ulmenweg 6, D-7812 Bad Krozingen (DE)**

(74) Vertreter: **Kaiser, Dieter Ralf, Dipl.-Ing., Gundelhardtstrasse 72, D-6233 Kelkheim/Ts. (DE)**

## Beschreibung

Die Erfindung betrifft einen Bleiakkumulator mit einem im Elektrolyten angeordneten Vorrat an Expandermaterial, wobei der Expandervorrat durch ein Sperrmaterial, das sich über die Lebensdauer des Akkumulators auflöst, vom Elektrolyt abgetrennt ist.

Expanderzusätze zur negativen aktiven Masse sollen durch Störung der Bleiabscheidung während des Aufladens der Bildung kompakter Bleikristalle entgegenwirken und dadurch die hochporöse Struktur der Elektrodenplatten erhalten. Geeignete Expandermaterialien sind Bariumsulfat, hochmolekulare organische Substanzen, insbesondere Ligninderivate, oder Farbstoffe wie Alizarinrot aus der Reihe der Oxyanthrachinone.

Da die Expanderstoffe eine merkliche Löslichkeit in Schwefelsäure besitzen, findet eine allmähliche Auslaugung der negativen Elektroden statt, wobei der Expander im Laufe des Zyklenbetriebes auch zu den positiven Elektroden gelangt und dort oxidativ zerstört wird. Die Folge des Expanderverlustes ist ein Kapazitätsrückgang, bei Starterbatterien insbesondere eine Verminderung der Kaltstartleistung. Durch höher angesetzte Expandermengen in den Masserezepturen hat man diesem Mangel nur begrenzt abhelfen können, wobei im Frühstadium der Lebensdauer des Akkumulators mit der erhöhten Anfangskonzentration ein Spreizeffekt in Kauf genommen wird, der das notwendige Mass zum Erreichen einer bestimmten Stromabgabeleistung bei weitem übersteigt.

Gemäss DE-A 2 855 313 ist daher bereits vorgeschlagen worden, Expandermaterial in einem Gefäss, welches durch eine kleine Öffnung mit dem Säureelektrolyten in Verbindung steht, auf Vorrat zu halten, wobei eine Ausschüttung von Expander kontinuierlich nach Massgabe des Öffnungsquerschnitts, der Sättigungskonzentration und der Diffusionskoeffizienten über einen ausgedehnten Zeitraum erfolgt.

Der Nachteil dieser Anordnung besteht darin, dass die Abgabe des Spreizmittels aus dem Depot bereits mit dem Einfüllen der Säure in die Zelle beginnt und aufgrund der ungehemmt einsetzenden Depotwirkung über die normale Ausschüttung von Expander aus den negativen Platten hinaus sich ein Überangebot einstellt, wie es ähnlich bereits weiter oben beschrieben wurde. Denn in einer neuen Akkumulatorenzelle ist die Spreizmittelmenge in der negativen Masse für einige hundert Zyklen zunächst ausreichend bemessen.

Der DE-B 2 736 750 ist eine negative, mit einem Expander ausgestattete Bleielektrode, zu entnehmen, die das Expandermaterial in einer gegenüber Schwefelsäure nur bedingt korrosionsstabilen Verkapselung enthält, so dass es mit zeitlicher Verzögerung freigesetzt wird. Dabei ist der Expander samt seiner Umhüllung in Form von Partikeln über die Elektrode verteilt. Das Umhüllungsmaterial ist ein Kunststoff, dessen chemische Zusammensetzung und die Wanddicke massgebend für den Zeitpunkt der beginnenden Expanderausschüttung sind. Der DE-B 2 736 750 ist aber keinerlei Hinweis auf Metall als Verkapselungsmaterial entnehmbar.

Der Erfindung liegt daher die Aufgabe zugrunde eine Vorratshaltung für das Expandermaterial in der Weise vorzunehmen, dass der Expandervorrat zumindest im Frühstadium der Akkumulatorlebensdauer vor einem Verbrauch geschützt ist und erst ab einem späteren Zeitpunkt nach und nach, dem wirklichen Bedarf entsprechend, abgegeben wird. Darüberhinaus soll das Sperrmaterial so ausgewählt sein, dass es bei seiner Auflösung im Akkumulator vorteilhafte Wirkungen entfaltet.

Die Aufgabe wird erfindungsgemäss dadurch gelöst, dass das Sperrmaterial aus Antimon oder Blei-Antimon-Legierung besteht.

Mit Aufnahme des Zyklenbetriebes ist das Sperrmaterial in der schwefelsäurehaltigen Umgebung einer korrosiven Wechselbeanspruchung permanent ausgesetzt. Diese Umgebung bewirkt in erster Linie einen oxidativen Abbau des Sperrmaterials, welches zu Anfang eine undurchlässige Wand zwischen dem Spreizmittel und dem Elektrolyten bildet. Jedoch wird erst nach einer gewissen Zeit der Einwirkung der abbauenden Kräfte die Sperrwand soweit geschwächt sein, dass sie stellenweise aufbricht und das dort nicht mehr geschützte Expandermaterial von der Schwefelsäure erfasst wird, sich oxidiert und sich zu lösen beginnt. Durch die fortschreitende Zerstörung der Wand kommt die Nachlieferung von Expandermaterial an beide Elektrodenpolaritäten zusehends in Fluss, so dass eine gute Strombelastbarkeit und Masseausnutzbarkeit zumindest für einen Teil der Akkumulatorlebensdauer gesichert ist.

Der Korrosionsangriff bei den angegebenen Metallen erfolgt relativ gleichmässig und definiert. Die Verwendung von Antimon oder Blei-Antimon-Legierungen, gegebenenfalls mit einem Zinnzusatz, besitzt den besonderen Vorteil, dass das Expanderdepot nebenbei noch als Antimondepot fungiert, indem mit der allmählichen Auflösung der Sperrwand Antimon in Form von antimonenthaltenden 3- und 5-wertigen Anionen ($SbOSO_4^-$, $[H_{5n-5} Sb_n O_{5n}]^{5-}$) an die Elektroden wandert und zumindest das Verhalten der positiven Elektrode vorteilhaft beeinflusst. Bestehen nämlich die Elektrodengitter aus einer antimonfreien Legierung, z.B. Blei-Calcium, die aufgrund hoher Wasserstoffüberspannung günstig ist, so neigen erfahrungsgemäss die positiven Elektroden zu verstärkter Schlammbildung, ein Nachteil, den Gitterplatten mit antimonhaltigen Legierungsgittern infolge genügender Antimonpräsenz in der aktiven Masse nicht aufweisen.

Da jedoch andererseits ein positives Elektrodengitter aus einer Blei-Antimon-Legierung sehr viel stärker als ein antimonfreies Gitter korrodiert, können positive Elektroden mit antimonfreiem Gitter mit uneingeschränktem Vorteil eingesetzt werden, wenn zur Verhinderung der Schlammbildung die positive aktive Masse statt aus dem Gitter aus der korrodierenden Depot-Trennwand mit Antimon versorgt wird. Besonders bei Akkumulatoren, die einer starken zyklischen Belastung mit gelegentlicher Tiefentladung ausgesetzt sind und antimonfreie Gitterplatten enthalten, kommt diese erfindungsgemässe Massnahme sehr vorteilhaft zum Tragen.

**Patentanspruch**

Bleiakkumulator mit einem im Elektrolyten angeordneten Vorrat an Expandermaterial, wobei der Expandervorrat durch ein Sperrmaterial, das sich über die Lebensdauer des Akkumulators auflöst, vom Elektrolyt abgetrennt ist, dadurch gekennzeichnet, dass das Sperrmaterial aus Antimon oder einer Blei-Antimon-Legierung besteht.

**Claim**

A lead storage cell with a supply of expander material disposed in the electrolyte, the expander material being separated from the electrolyte by a barrier material which dissolves over the life of the cell, characterised in that the barrier material comprises antimony or a lead/antimony alloy.

**Revendication**

Accumulateur au plomb avec une réserve d'un matériau expanseur, contenue dans l'électrolyte, la réserve d'expanseur étant séparée de l'électrolyte par un matériau de blocage qui se dissout pendant la durée de vie de l'accumulateur, caractérisé en ce que le matériau de blocage est formé de l'antimoine ou d'un alliage de plomb et de l'antimoine.